# EUROPEAN PATENT SPECIFICATION

(11) **EP 3 671 432 B1**
(45) Date of publication and mention of the grant of the patent: **09.06.2021**
(21) Application number: 19205476.5
(22) Date of filing: 25.10.2019
(51) Int. Cl.: G06F 7/499

(54) **ARITHMETIC PROCESSING DEVICE AND METHOD OF CONTROLLING ARITHMETIC PROCESSING DEVICE**
VORRICHTUNG ZUR ARITHMETISCHEN VERARBEITUNG UND VERFAHREN ZUR STEUERUNG DER VORRICHTUNG ZUR ARITHMETISCHEN VERARBEITUNG
DISPOSITIF DE TRAITEMENT ARITHMÉTIQUE ET PROCÉDÉ DE COMMANDE D'UN TEL DISPOSITIF

(30) Priority: 18.12.2018 JP 2018236384
(43) Date of publication of application: 24.06.2020
(73) Proprietor: FUJITSU LIMITED, Kanagawa 211-8588 (JP)
(72) Inventor: KAWABE, Yukihito, Kawasaki-shi, Kanagawa 211-8588 (JP); ITO, Makiko, Kawasaki-shi, Kanagawa 211-8588 (JP)
(74) Representative: Haseltine Lake Kempner LLP

(56) References cited:
- WO-A1-2017/185412
- WO-A1-2018/139266
- DIPANKAR DAS ET AL: "Mixed Precision Training of Convolutional Neural Networks using Integer Operations", ARXIV.ORG, CORNELL UNIVERSITY LIBRARY, 201 OLIN LIBRARY CORNELL UNIVERSITY ITHACA, NY 14853, 3 February 2018 (2018-02-03), XP081214609,

## Description

### FIELD

The embodiments relate to an arithmetic processing device and a method of controlling an arithmetic processing device.

### BACKGROUND

A method has been proposed, which improves the accuracy of deep learning by updating a decimal point position of a fixed-point number based on a distribution of the positions of bits of the fixed-point number of data obtained by the execution of an operation instruction in an arithmetic processing device used in the deep learning or the like (refer to, for example, Patent Literature 1 and 2). A method has been proposed, which inhibits the occurrence of overflow by setting a decimal point position based on the size of a mask used to execute a convolution operation when the convolution operation is executed on image data using a fixed-point number (refer to, for example, Patent Literature 3). A method has been proposed, which changes a decimal point position of a variable to be used for an operation in an arithmetic device based on the average of the magnitude of input audio so as to reduce a bit length of data to be used in the arithmetic device without a reduction in the accuracy of the operation (refer to, for example, Patent Literature 4).

### SUMMARY

### TECHNICAL PROBLEM

For example, a deep neural network includes a layer for executing an operation using a fixed-point number and a layer for executing an operation using a floating-point number. In the case where the layer for executing the operation using the fixed-point number is coupled to and succeeding the layer for executing the operation using the floating-point number, a result of executing the operation on the floating-point number is converted to a fixed-point number and the fixed-point number after the conversion is input to the succeeding layer. In this case, by updating a decimal point position of the fixed-point number after the conversion based on a distribution of the positions of bits of the floating-point number, the accuracy of the operation in the succeeding layer is improved and the accuracy of deep learning is improved. The positions of the bits of the floating-point number, however, may be widely distributed due to values of an exponential part, a large circuit for acquiring the distribution of the positions of the bits is to be newly installed and a circuit size of an arithmetic processing device is increased.

According to an aspect, the present disclosure aims to reduce a circuit size of an arithmetic processing device without a reduction in the accuracy of an operation.

### SOLUTION TO PROBLEM

According to an aspect of the embodiments, an arithmetic processing device includes: a fixed-point operator that executes an operation on a fixed-point number; a floating-point operator that executes an operation on a floating-point number; a first converter that converts a result of the operation by the floating-point operator to a fixed-point number having a second bit width larger than a first bit width; a statistical information acquirer that acquires statistical information of any of the fixed-point number output by the fixed-point operator and the fixed-point number output by the first converter; and a second converter that converts, to a fixed-point number having the first bit width, the fixed-point number that has been output by the fixed-point operator or by the first converter and of which the statistical information has been acquired.

### ADVANTAGEOUS EFFECTS OF INVENTION

According to an aspect, techniques disclosed herein may reduce a circuit size of an arithmetic processing device without a reduction in the accuracy of an operation.

### BRIEF DESCRIPTION OF DRAWINGS

FIG. 1 is a diagram illustrating an example of an arithmetic processing device according to an embodiment;
FIG. 2 is a diagram illustrating an example in which a decimal point position is updated by an update information generator illustrated in FIG. 1;
FIG. 3 is a diagram illustrating an example of an arithmetic processing device according to another embodiment;
FIG. 4 is a diagram illustrating an example of deep learning executed using the arithmetic processing device illustrated in FIG. 3;
FIG. 5 is a diagram illustrating an example in which a decimal point position is updated in processes of layers illustrated in FIG. 4;
FIG. 6 is a diagram illustrating an example of the case where statistical information of a 16-bit dynamic fixed-point number is acquired and the case where a 32-bit dynamic fixed-point number is acquired;
FIG. 7 is a diagram illustrating an example of a method of setting a decimal point position of the 32-bit dynamic fixed-point number based on a decimal point position of the 16-bit dynamic fixed-point number;
FIG. 8 is a diagram illustrating an example of a backward process of updating a coefficient such as a weight in the deep learning executed using the arithmetic processing device illustrated in FIG. 3;
FIG. 9 is a diagram illustrating another example of the deep learning executed using the arithmetic processing device illustrated in FIG. 3;
FIG. 10 is a diagram illustrating an example of an operational flow of the arithmetic processing device illustrated in FIG. 3;
FIG. 11 is a diagram illustrating another example (comparative example) of an arithmetic processing device;
FIG. 12 is a diagram illustrating an example (comparative example) of deep learning executed using the arithmetic processing device illustrated in FIG. 11; and
FIG. 13 is a diagram illustrating an example of an arithmetic processing device according to another embodiment.

### DESCRIPTION OF EMBODIMENTS

Hereinafter, embodiments are described using the drawings.

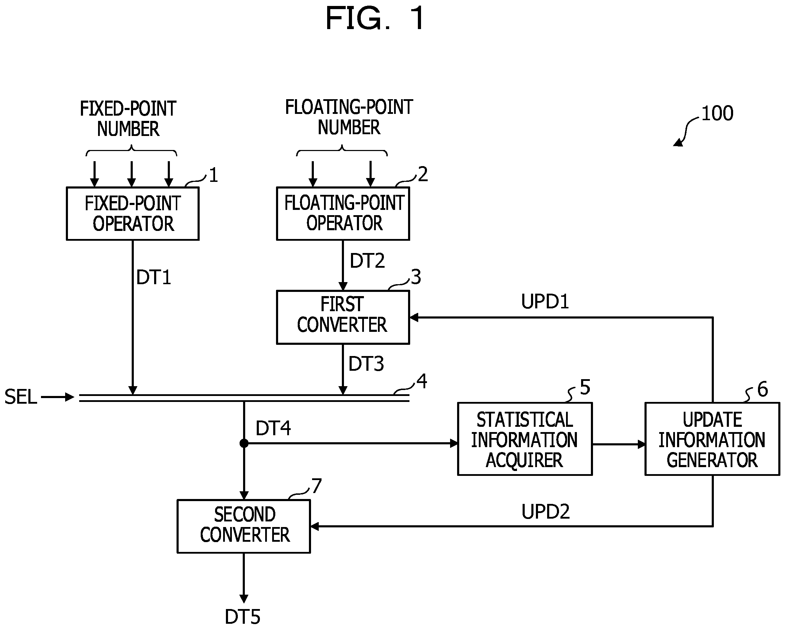

FIG. 1 illustrates an example of an arithmetic processing device according to an embodiment. An arithmetic processing device 100 illustrated in FIG. 1 may be a dedicated processor, a graphics processing unit (GPU), a central processing unit (CPU), or the like that is used in deep learning.

The arithmetic processing device 100 includes a fixed-point operator 1 that executes an operation on a fixed-point number, a floating-point operator 2 that executes an operation on a floating-point number, a first converter 3, a selector 4, a statistical information acquirer 5, an update information generator 6, and a second converter 7. The fixed-point operator 1 includes, for example, a 16-bit multiply-accumulate operator and outputs an operation result DT1 (of, for example, 40 bits) to the selector 4.

The floating-point operator 2 includes, for example, a 32-bit multiplier, a 32-bit divider, or the like and outputs a result DT2 (of, for example, 32 bits) of executing an operation on a floating-point number to the first converter 3. For example, the 32-bit floating-point number includes an 8-bit decimal part and may represent 256 decimal point positions.

The first converter 3 converts the 32-bit operation result DT2 (floating-point number) obtained by the floating-point operator 2 to, for example, an operation result DT3 (fixed-point number) of 32 bits that are an example of a second bit width. In this case, the first converter 3 matches a decimal point position of the fixed-point number DT3 with a decimal point position UPD1 calculated by the update information generator 6. In other words, the first converter 3 matches the decimal point position of the fixed-point number DT3 with the update information UPD1 indicating the decimal point position calculated by the update information generator 6 and sets the number of bits of an integral part of the fixed-point number DT3 and the number of bits of a decimal part of the fixed-point number DT3. The first converter 3 may convert the 32-bit operation result DT2 (floating-point number) to the operation result DT3 (fixed-point number) having 40 bits equal to the number of bits of the operation result DT1.

The selector 4 selects any of the operation results DT1 and DT3 based on a selection signal SEL and outputs the selected operation result DT1 or DT3 as an operation result DT4. For example, the selection signal SEL is set to a level that causes the fixed-point number DT1 output by the fixed-point operator 1 to be selected based on an operation instruction to cause the fixed-point operator 1 to execute an operation. For example, the selection signal SEL is set to a level that causes the fixed-point number DT3 output by the first converter 3 to be selected based on a transfer instruction to cause the operation result DT2 obtained by the floating-point operator 2 to be transferred to the second converter 7.

In a layer that is among multiple layers included in a deep neural network and uses the fixed-point operator 1 to execute an operation, the selector 4 may select the output of the fixed-point operator 1 based on the operation instruction. In a layer that is among the multiple layers included in the deep neural network and uses the floating-point operator 2 to execute an operation, the selector 4 may select the output of the floating-point operator 2 based on the transfer instruction.

The statistical information acquirer 5 acquires statistical information (for example, distribution information) of the 40- or 32-bit fixed-point number DT4 selected by the selector 4. For example, the statistical information acquirer 5 treats the 32-bit fixed-point number DT4 as 40-bit data. Thus, statistical information of the fixed-point numbers DT1 and DT3 may be acquired by the common statistical information acquirer 5, and a circuit size of the statistical information acquirer 5 may be reduced. The statistical information acquirer 5 may change, based on the selection signal SEL, a bit range to be used to acquire statistical information for each fixed-point number (of 40 bits or 32 bits).

The statistical information acquirer 5 acquires statistical information of the 40- or 32-bit fixed-point number DT4 before conversion by the second converter 7 without acquiring statistical information of a 16-bit fixed-point number DT5 converted by the second converter 7 described later. Since the statistical information is acquired using the fixed-point number DT4 with a relatively large information amount, an increase in the circuit size of the statistical information acquirer 5 may be suppressed without a reduction in the accuracy of the statistical information.

For example, in the case where each of the layers of the deep neural network executes multiple mini-batch processes, the statistical information acquirer 5 may acquire distribution information of bit values of the operation result DT4 for each of the mini-batch processes. The mini-batch processes are processes to be executed for each of multiple groups into which data to be processed in each of the layers is divided.

The distribution information of the bit values is information indicating a distribution of the most significant bits or least significant bits of the bit values of the operation result DT4 or is information indicating the position of the maximum among the most significant bits or the position of the minimum among the least significant bits of the bit values of the operation result DT4. The most significant bits indicate the position of a bit of 1 on the most significant side for positive values and the position of a bit of 0 on the most significant side for negative values. The least significant bits indicate the position of a bit of 1 on the least significant side for positive values and the position of a bit of 0 on the least significant side for negative values.

The update information generator 6 generates, based on the statistical information acquired by the statistical information acquirer 5, the update information UPD1 to be used to update the decimal point position of the fixed-point number DT3 output by the first converter 3 and update information UPD2 to be used to update a decimal point position of the fixed-point number DT5 output by the second converter 7. For example, the update information generator 6 may calculate the update information UPD1 by adding a predetermined offset value to the decimal point position indicated by the update information UPD2. The update information UPD1 and UPD2 indicates the decimal point positions or indicates amounts by which the decimal point positions are shifted from the currently set decimal point positions.

For example, the update information generator 6 generates the update information UPD1 and UPD2 based on statistical information acquired in the mini-batch processes after the execution of the multiple mini-batch processes executed in the layers of the deep neural network. In the layer that executes an operation on a fixed-point number, the fixed-point number DT3 output by the first converter 3 is not used. Thus, the update information generator 6 may not generate the update information UPD1 in the layer that processes a fixed-point number.

However, since the update information UPD1 and UPD2 is generated regardless of the operating operators 1 and 2, the update information generator 6 may be made common to a process of the layer that uses the fixed-point operator 1 and a process of the layer that uses the floating-point operator 2. As a result, it may be possible to suppress an increase in a circuit size of the update information generator 6. When the update information UPD1 is generated by adding the predetermined offset value to the decimal point position indicated by the update information UPD2, a circuit for generating the update information UPD1 may be designed as a shifter or the like, and the circuit size is small.

The first converter 3 updates, based on the update information UPD1, the decimal point position of the fixed-point number DT3 to be output. The second converter 7 updates, based on the update information UPD2, the decimal point position of the fixed-point number DT5 to be output. The fixed-point operator 1 sets, based on the update information UPD2, a decimal point position of the fixed-point number to be used for an operation. The decimal point positions indicated by the update information UPD1 and UPD2 calculated by the update information generator 6 during a certain mini-batch process are used in a next mini-batch process.

A storage unit that holds statistical information may be installed between the statistical information acquirer 5 and the update information generator 6. The storage unit is a register, a buffer, a random-access memory (RAM), or the like. In this case, the statistical information acquirer 5 causes the acquired statistical information to be stored in the storage unit. The update information generator 6 executes, based on the statistical information stored in the storage unit, a process of determining a decimal point position to be updated.

The second converter 7 converts the 40- or 32-bit operation result DT4 to the fixed-point number DT5 of 16 bits that are an example of a first bit width. For example, the second converter 7 generates the fixed-point number DT5 by reducing a bit width of either the fixed-point number DT1 (operation result) output by the fixed-point operator 1 or the fixed-point number DT3 (operation result) converted by the first converter 3. In this case, the second converter 7 updates the decimal point position of the fixed-point number DT5 based on the update information UPD2 generated by the update information generator 6. In the case where the fixed-point number DT5 converted by the second converter 7 and having the small bit width is used in a next layer or the like, the decimal point position of the fixed-point number DT5 is adjusted to an optimal decimal point position, and it is, therefore, possible to suppress a reduction in the accuracy of an operation to be executed after that.

In the embodiment, in a mini-batch process of the layer that uses a fixed-point number and a mini-batch process of the layer that uses a floating-point number, statistical information of the fixed-point number DT4 (DT1 or DT3) is acquired by the common statistical information acquirer 5. The update information UPD1 and UPD2 indicating the decimal point positions is generated by the common update information generator 6. Since the update information UPD1 is calculated by adding the predetermined offset value to the decimal point position indicated by the update information UPD2, the size of the circuit installed in the update information generator 6 and configured to calculate the update information UPD1 may be suppressed.

Thus, a dedicated update information generator for updating a decimal point position for the mini-batch processes of the layer that uses a floating-point number may not be installed. By updating the decimal point position of the fixed-point number DT5 based on the acquired statistical information, it may be possible to suppress a reduction in the accuracy of an operation to be executed using the fixed-point number DT5. As a result, the circuit size of the arithmetic processing device 100 may be reduced without a reduction in the accuracy of an operation.

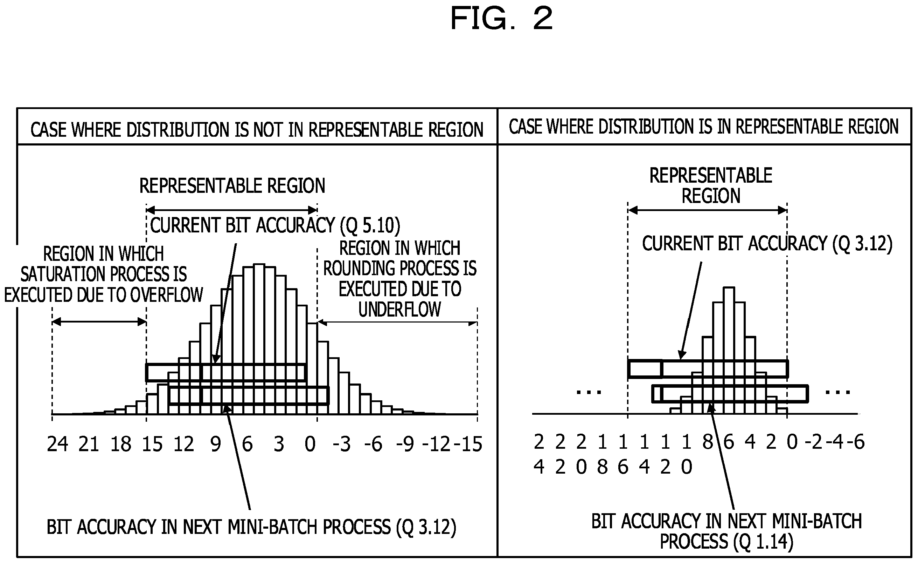

FIG. 2 illustrates an example in which a decimal point position is updated by the update information generator 6 illustrated in FIG. 1. FIG. 2 illustrates a distribution of the most significant bits of bit values of the operation result DT4 acquired by the statistical information acquirer 5. The left side of FIG. 2 illustrates the case where the distribution is not in a representable region, while the right side of FIG. 2 illustrates the case where the distribution is in the representable region.

In the case illustrated on the left side of FIG. 2, a saturation process is executed on a fixed-point number that has the most significant bit of bit values on an upper bit side with respect to the representable region (of 16 bits) (overflow). On the other hand, a rounding process is executed on a fixed-point number that has the most significant bit of bit values on a lower bit side with respect to the representable region (of 16 bits) (underflow). The update information generator 6 determines, based on the distribution acquired by the statistical information acquirer 5, that the distribution of the fixed-point number represented with current bit accuracy (Q5.10) is biased toward the upper bit side. Then, the update information generator 6 determines bit accuracy in a next mini-batch process as (Q3.12).

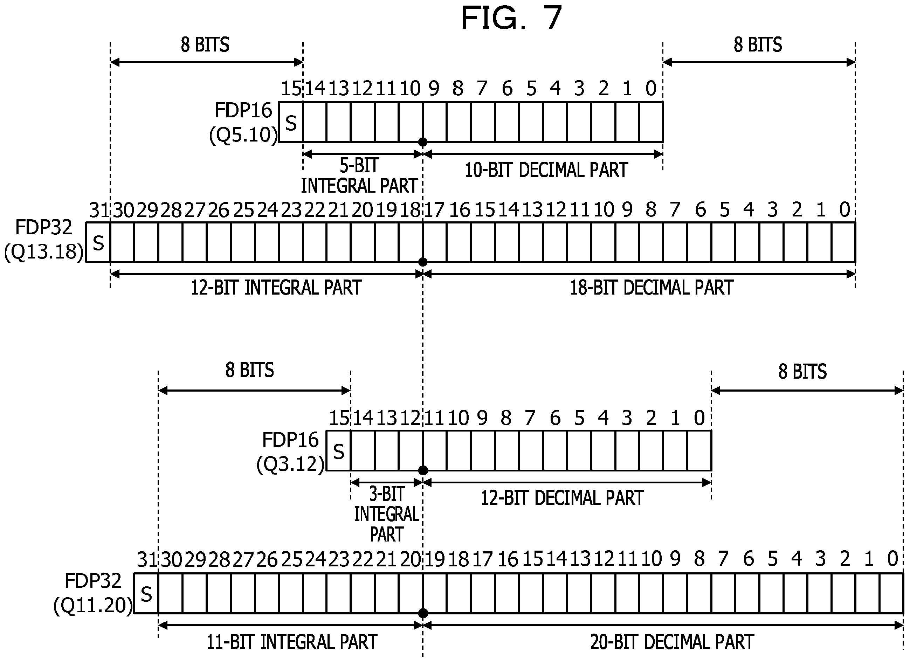

Then, the update information generator 6 generates the update information UPD2 indicating the bit accuracy (Q3.12) or generates the update information UPD2 indicating that the decimal point position is shifted by 2 bits toward the upper bit side. Although not illustrated in FIG. 2, the update information generator 6 generates the update information UPD1 indicating the decimal point position obtained by adding the predetermined offset value to the decimal point position indicated by the update information UPD2. By executing this, it may be possible to suppress a reduction in the accuracy of the fixed-point number (DT5) to be used in the next mini-batch process. Relationships between the decimal point position of the 16-bit fixed-point number and the decimal point position of the 32-bit fixed-point number are described later with reference to FIG. 7.

For example, the update information generator 6 determines the decimal point position of the fixed-point number so that 16-bit data represented with the bit accuracy is at the center of the distribution. The bit accuracy (Q5.10) and (Q3.12) indicates fixed-point number notation in Q format. The bit accuracy (Q5.10) indicates 16-bit data having a 1-digit sign bit, a 5-digit integral part, and a 10-digit decimal part, while the bit accuracy (Q3.12) indicates 16-bit data having a 1-digit sign bit, a 3-digit integral part, and a 12-digit decimal part.

The update information generator 6 may update the decimal point position so that "(the number of data items that have caused overflow) / (the number of all data items)" is smaller than a predetermined value. Alternatively, the update information generator 6 may update the decimal point position based on "(the number of data items that have caused underflow) / (the number of all the data items)" or may update the decimal point position based on the number of data items that have caused overflow and the number of data items that have caused underflow or based on the ratio of data items that have caused overflow and the number of data items that have caused underflow.

When the distribution is in the representable region in the case illustrated on the right side of FIG. 2, the update information generator 6 determines the decimal point position so that the 16-bit data represented with bit accuracy is at the center of the distribution, for example. In the example illustrated in FIG. 2, the update information generator 6 determines, based on the distribution acquired by the statistical information acquirer 5, that the distribution of the fixed-point number represented with the bit accuracy (Q3.12) is biased toward the upper bit side. Then, the update information generator 6 determines bit accuracy in the next mini-batch process as (Q1.14).

In the embodiment, optimal decimal point positions of the fixed-point numbers DT3 and DT5 that are the operation results are calculated and updated using the statistical information acquirer 5 and the update information generator 6. Thus, the circuit size of the arithmetic processing device 100 may be reduced without a reduction in the accuracy of the deep learning or the like. In other words, in the case where a fixed-point operation or a floating-point operation is executed, the fixed-point number DT5 may be used in a process of a succeeding layer or the like without a reduction in the accuracy.

Power to be consumed by the arithmetic processing device 100 may be reduced, compared with the case where statistical information acquirers 5 for a fixed-point operation and a floating-point operation and update information generators 6 for the fixed-point operation and the floating-point operation are installed. By reducing the number of bits of the fixed-point number DT5 by the second converter 7, it may be possible to reduce the amount of data to be processed in a succeeding process in which the fixed-point number DT5 is used and to reduce a processing time without a reduction in the processing accuracy of the deep learning.

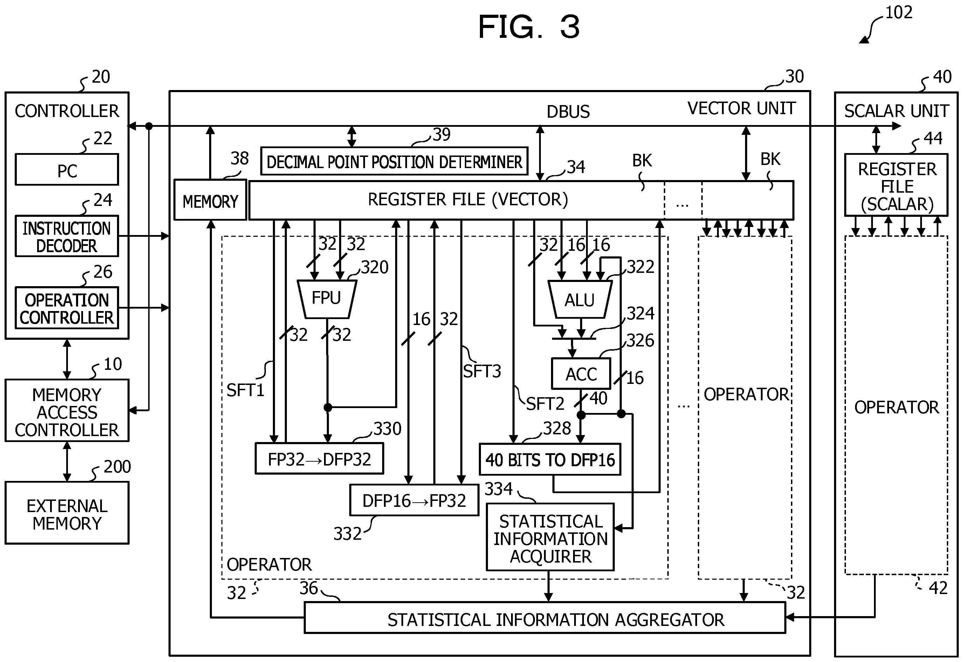

FIG. 3 illustrates an example of an arithmetic processing device according to another embodiment. For example, an arithmetic processing device 102 illustrated in FIG. 3 is a dedicated processor to be used in deep learning and is formed in a chip shape. The arithmetic processing device 102 may be a general-purpose processor such as a GPU or a CPU.

The arithmetic processing device 102 includes a memory access controller 10, a controller 20, a vector unit 30, and a scalar unit 40. The controller 20 includes a program counter (PC) 22, an instruction decoder 24, and an operation controller 26. The vector unit 30 includes multiple operators 32, a register file 34 including multiple registers, a statistical information aggregator 36, a memory 38, and a decimal point position determiner 39. The scalar unit 40 includes an operator 42 and a register file 44 including multiple registers. The register file 44 is coupled to a data bus DBUS. The memory access controller 10, the controller 20, the vector unit 30, and the scalar unit 40 are coupled to each other via the data bus DBUS. In FIG. 3, the statistical information aggregator 36, the memory 38, and the decimal point position determiner 39 are included in the vector unit 30, but may be installed outside the vector unit 30.

The memory access controller 10 controls, based on an instruction from the controller 20, access to an external memory 200 coupled to the arithmetic processing device 102. The external memory 200 is a dynamic random-access memory (DRAM) or the like. The memory access controller 10 reads an instruction code stored in the external memory 200 and outputs the read instruction code to the controller 20. The memory access controller 10 reads data or the like stored in the external memory 200 and to be used for an operation and outputs the read data or the like to the vector unit 30 or the scalar unit 40.

The operation controller 26 loads an instruction from the external memory 200 based on an address generated by the program counter 22 and transfers the loaded instruction to the instruction decoder 24. The instruction decoder 24 decodes the transferred instruction and outputs a result of the decoding to the operation controller 26. The operation controller 26 generates, based on the decoding result from the instruction decoder 24, a control signal to control the vector unit 30 or the scalar unit 40 and controls the execution of an operation by the vector 30 or the scalar unit 40.

Each of the operators 32 of the vector unit 30 includes a floating-point operation unit (FPU) 320, an arithmetic logic unit (ALU) 322, a selector 324, an accumulator register (ACC) 326, data converters 328, 330, and 332, and a statistical information acquirer 334. The vector unit 30 executes a vector operation instruction decoded by the instruction decoder 24. The FPU 320 is an example of a floating-point operator. The ALU 322 is an example of a fixed-point operator.

The FPU 320 has a function of executing a multiply-accumulate operation, a multiplication operation, and an addition operation on a 32-bit floating-point number, a special operation on an exponential or the like, an operation of converting a floating-point number to a fixed-point number, and the like, for example. The FPU 320 outputs, to the register file 34 and the data converter 328, a 32-bit floating-point number, which is an operation result.

The ALU 322 has a function of executing a multiply-accumulate operation, an addition operation, a comparison operation, a logical operation, and the like on a 16-bit dynamic fixed-point number. For example, the ALU 322 includes a multiplier and accumulator (MAC). A result of accumulating results of multiply-accumulate operations is stored in the 40-bit accumulator register 326 via the selector 324. Results of executing operations including an addition operation, a comparison operation, and a logical operation are written as a 16-bit fixed-point number back to the register file 34 via the data converter 328.

When the ALU 322 executes an operation on a fixed-point number, the selector 324 selects data output from the ALU 322 and outputs the selected output data to the accumulator register 326. When a transfer instruction to store a 32-bit dynamic fixed-point number in the accumulator register 326 from the register file 34 is executed, the selector 324 selects the 32-bit dynamic fixed-point number output from the register file 34. The selector 324 outputs the selected 32-bit dynamic fixed-point number to the accumulator register 326. For example, the 32-bit dynamic fixed-point number selected by the selector 324 is data converted by the data converter 330 and stored in the register file 34.

The data converter 328 extracts, based on shift information SFT2 held in the register file 34 and indicating an amount by which a decimal point position is shifted, 16 bits from 40-bit data output from the accumulator register 326. As described with reference to FIG. 2, a decimal point position of the 16 bits is determined based on the position of the 16 bits extracted from the 40-bit data.

Then, the data converter 328 executes a rounding process on the extracted 16-bit data to generate a 16-bit dynamic fixed-point number DFP16 and causes the generated dynamic fixed-point number DFP16 to be stored in the register file 34. The data converter 328 is an example of a second converter. The shift information SFT2 is an example of second update information and is used to update a decimal point position of the 16-bit dynamic fixed-point number DFP16 output by the data converter 328. The dynamic fixed-point number DFP16 is, for example, represented using Q format. The decimal point position of the dynamic fixed-point number DFP16 is able to be shifted.

The data converter 330 converts a 32-bit floating-point number FP32 output from the FPU 320 to a 32-bit dynamic fixed-point number DFP32. In this case, the data converter 330 sets a decimal point position of the dynamic fixed-point number DFP32 based on shift information SFT1 held in the register file 34 and indicating an amount by which the decimal point position is shifted. Then, the data converter 330 causes the dynamic fixed-point number DFP32 obtained by the conversion to be stored in the register file 34. The data converter 330 is an example of a first converter. The shift information SFT1 is an example of first update information and is used to update the decimal point position of the 32-bit dynamic fixed-point number DFP32 output by the data converter 330. The dynamic fixed-point number DFP32 is, for example, represented using Q format. The decimal point position of the dynamic fixed-point number DFP32 is able to be shifted.

The data converter 332 converts the 16-bit dynamic fixed-point number DFP16 transferred from the register file 34 to the 32-bit floating-point number FP32 and transfers the converted floating-point number FP32 to the register file 34. In this case, the data converter 332 restores the decimal point position of the dynamic fixed-point number DFP16 to the original decimal point position based on shift information SFT3 used for the setting of the decimal point position of the dynamic fixed-point number DFP16 and converts the dynamic fixed-point number DFP16 to the floating-point number FP32. The data converter 332 is an example of a third converter.

The shift information SFT3 indicates a decimal point position (corresponding to the shift information SFT2) determined by a preceding layer L1 in a previous mini-batch process and is held in the register file 34. Hereinafter, the dynamic fixed-point number DFP32 is also merely referred to as DFP32, the dynamic fixed-point number DFP16 is also merely referred to as DFP16, and the floating-point number FP32 is also merely referred to as FP32.

For example, the data converter 332 operates based on the decoding, executed by the instruction decoder 24, of a conversion instruction to convert the DFP16 to the FP32. The data converters 330 and 332 may be included in the FPU 320 and may operate as one of functions of the FPU 320. The conversion from a floating-point number to a fixed-point number by the data converter 330 is expressed by Equation (1). DFP = round(FP ^{∗} 2^{m}) ... (1)

The conversion from a fixed-point number to a floating-point number by the data converter 332 is expressed by Equation (2). FP = DFP ^{∗} 2^{-m} ... (2)

In each of Equations (1) and (2), DFP indicates a dynamic fixed-point number, FP indicates a floating-point number, round indicates a rounding function such as rounding off, even rounding, or probability rounding, and m indicates a decimal point position. A symbol * indicates a product.

The statistical information acquirer 334 acquires statistical information of the 40-bit data output from the accumulator register 326. For example, the statistical information acquirer 334 acquires the most significant bit of bit values of the 40-bit data, the least significant bit of the bit values of the 40-bit data, or the most significant bit and least significant bit of the bit values of the 40-bit data. For example, the statistical information acquirer 334 transfers statistical information acquired by the statistical information acquirer 334 to the statistical information aggregator 36 every time a mini-batch process is completed.

The register file 34 includes multiple memory banks BK corresponding to and assigned to the multiple operators 32 and is coupled to the data bus DBUS for each of the memory banks BK. Each of the memory banks BK is coupled to any of the operators 32. A crossbar switch (not illustrated) that couples a register included in the register file 34 and holding one or multiple source operands to an operator 32 for a predetermined memory bank BK may be installed between the register file 34 and the operator 32.

The statistical information aggregator 36 aggregates statistical information acquired by the statistical information acquirers 334 of the multiple operators 32 of the vector unit 30 and statistical information acquired by a statistical information acquirer (not illustrated) of the scalar unit 40 and causes the aggregated statistical information to be stored in the memory 38. For example, the statistical information aggregator 36 acquires, as statistical information, one or more of a distribution of the most significant bits of bit values of 40-bit data acquired by the statistical information acquirers 334, a distribution of the least significant bits of the bit values of the 40-bit data acquired by the statistical information acquirers 334, the position of the maximum of the most significant bits, and the position of the minimum of the least significant bits. The statistical information acquirers 334 and the statistical information aggregator 36 are an example of a statistical information acquirer.

The memory 38 is coupled to the data bus DBUS and is, for example, a static random-access memory (SRAM). The memory 38 holds the statistical information written from the statistical information aggregator 36.

The scalar unit 40 is a unit that processes a scalar instruction (instruction to handle a single data item). The operator 42 of the scalar unit 40 executes a scalar operation instruction (instruction to handle a single data item) decoded by the instruction decoder 24. The operator 42 includes a statistical processing unit that is not illustrated. The statistical processing unit acquires statistical information of a result of an operation by the operator 42 and outputs the acquired statistical information to the statistical information aggregator 36 in a similar manner to the statistical information acquirers 334. An operation function of the operator 42 of the scalar unit 40 may be different from operation functions of the operators 32 of the vector unit 30 due to a difference between an operation detail of a scalar instruction of the arithmetic processing device 102 and an operation detail of a vector instruction of the arithmetic processing device 102.

The decimal point position determiner 39 is coupled to the data bus DBUS and determines new decimal point positions of data to be used in a next mini-batch process based on statistical information (for example, the distribution of the most significant bits of the bit values) stored in the memory 38. The decimal point position determiner 39 causes the determined decimal point positions to be stored in the register file 34. The decimal point positions stored in the register file 34 are output as the shift information SFT1 and SFT2.

Then, the decimal point positions stored in the register file 34 are used in a mini-batch process of a layer that executes a process after the determination of the decimal point position. The decimal point position determiner 39 may be enabled as a portion of a control program (software) stored in the external memory 200, instead of being implemented as a circuit (hardware). In this case, the operator 42 of the scalar unit 40 may determine a decimal point position based on the control program executed by the arithmetic processing device 102 and the statistical information stored in the memory 38. The decimal point position determiner 39 is an example of an update information generator that updates a decimal point position.

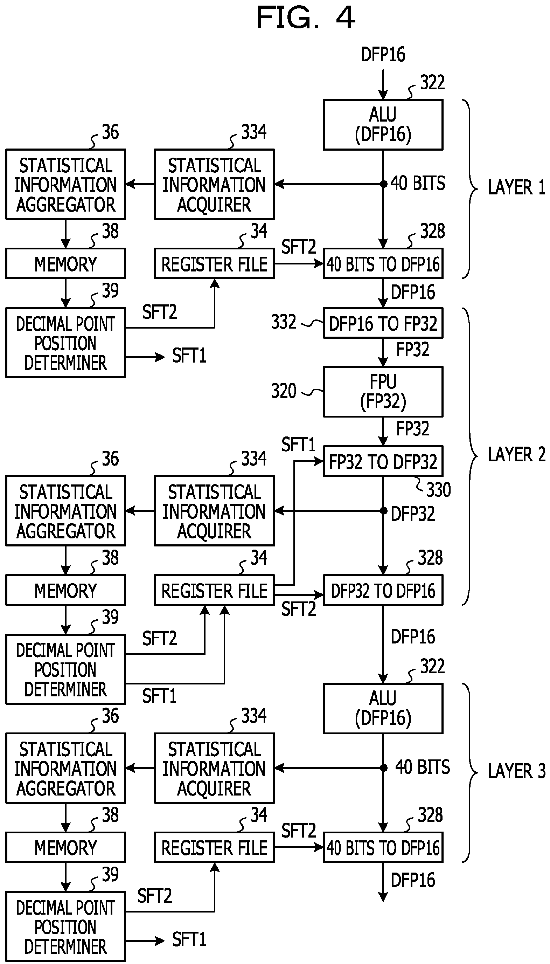

FIG. 4 illustrates an example of the deep learning executed using the arithmetic processing device 102 illustrated in FIG. 3. FIG. 4 illustrates an example in which processes of multiple layers L1, L2, and L3 included in a deep neural network are sequentially executed using each of the multiple operators 32 of the arithmetic processing device 102. The processes of the layers L1 and L3 are executed by executing operations on the DFP16 by the ALU 322. The process of the layer L2 is executed by executing an operation on the FP32 by the FPU 320. A process of another layer may be executed before the process of the layer L1 or after the process of layer L3. Each of the processes of the layers L1, L2, and L3 includes multiple mini-batch processes.

Examples of the layers that use the ALU 322 in the deep learning are a convolution layer, a pooling layer, and a fully coupled layer. Examples of the layer that uses the FPU 320 in the deep learning are a normalization layer in which an operation such as a division operation, a square root operation, or an exponentiation operation is executed and a softmax layer in which an exponential is used. Since values to be used for an operation are distributed in a wide region, the accuracy of executing an operation on a fixed-point number is not sufficient. Even when data is represented using a large number of digits, the process of the layer is executed using the FPU 320.

In the processes of the layers L1 and L3, the ALU 322 uses multiple DFP16 to execute the multipole operations. The statistical information acquirer 334 acquires, for each of the operations, statistical information of 40-bit values that are a result of the operation by the ALU 322. The statistical information acquired by the statistical information acquirer 334 is aggregated by the statistical information aggregator 36 (FIG. 3) for each of the mini-batch processes and is stored as distribution information or the like in the memory 38.

The 40-bit operation result is converted by the data converter 328 to DFP16. In this case, the data converter 328 uses the shift information SFT2 held in the register file 34 or the like to set a decimal point position in the DFP16, extracts 16 bits from the 40-bit operation result based on the set decimal point position, and generates the DFP16. An operation of generating the DFP 16 by the data converter 328 is the same as or similar to that described with reference to FIG. 2. The DFP16 that is a result of the process of the layer L1 is, for example, temporarily stored in the external memory 200 (FIG. 3) or the like via the register file 34 and is used in the process of the layer L2.

In the processes of the layers L1 and L3, every time a mini-batch process is completed, the decimal point position determiner 39 uses the statistical information stored in the memory 38 to determine the decimal point position to be used in a next mini-batch process. The decimal point position determiner 39 causes the shift information SFT2 indicating the determined decimal point position to be stored in the register file 34. The shift information SFT2 stored in the register file 34 is output to the data converter 328 and used to set the decimal point position of the DFP16 that is an operation result that is obtained in the next mini-batch process. Statistical information stored in the memory 38 is deleted every time a mini-batch process is completed.

In the process of the layer L2, the DFP16, which has been obtained in the process of the layer L1, has the decimal point position corrected, and has been held in the register file 34, is used. The 16-bit dynamic fixed-point number DFP16 is converted by the data converter 332 to the 32-bit floating-point number FP32. In this case, after the decimal point position of the DFP16 is restored to the original decimal point position of the DFP16 using the shift information SFT3, the DFP16 is converted to the FP32. Thus, the DFP16 before the correction of the decimal point position is converted to the FP32, and the process is executed by the layer L2 on a nonlinear function that does not take over the decimal point position set by the previous layer L1 and is an exponential function, a sigmoid function, a hyperbolic tangent tanh, or the like.

The FPU 320 sequentially uses the converted FP32 to execute multiple operations based on an operation instruction. The FP32 that is an operation result obtained by the FPU 320 is converted by the data converter 330 to the DFP32. The DFP32 is stored in the register file 34. In the conversion to the DFP32, the decimal point position of the DFP32 is set based on the shift information SFT1. In the case where an operation is executed using the FP32 in the process of the succeeding layer, the FP32 transferred from the register file 34 to the external memory 200 or the like is used in the succeeding layer.

For example, when the following floating-point operation instruction is executed, an operation may be executed and the conversion from the FP32 to the DFP32 may be executed by the data converter 330. The instruction is FADDq with Fdst, Fsrc1, Fsrc2, and Fqsft.

FADDq indicates the instruction to execute the addition operation (composite instruction) on the floating-point number and execute a process (including the setting of the decimal point position) of executing the conversion to the DFP32. Fdst, Fsrc1, Fsrc2, and Fqsft indicate register numbers of the register file 34. dst indicates a destination operand, and src indicates a source operand. qsft indicates an amount by which the decimal point position is shifted. qsft is output as the shift information SFT1 to the data converter 330.

The statistical information acquirer 334 acquires statistical information of the DFP32 transferred via the selector 324 and the accumulator register 326 and transfers the acquired statistical information to the statistical information aggregator 36 upon the completion of a mini-batch process. The statistical information aggregator 36 causes the transferred statistical information to be stored in the memory 38. For example, the transfer of the statistical information from the statistical information acquirer 334 to the statistical information aggregator 36 and the transfer of the statistical information from the statistical information aggregator 36 to the memory 38 are executed based on a transfer instruction.

The DFP32 held in the register file 34 is, for example, transferred to the data converter 328 based on a transfer instruction and converted by the data converter 328 to the DFP16, and the DFP16 is stored in the register file 34. The DFP16 that is a result of the process of the layer L2 and has been stored in the register file 34 is temporarily stored in, for example, the external memory 200 or the like and is used in the process of the layer L3. In the conversion from the DFP32 to the DFP16, the decimal point position of the DFP16 is corrected based on the shift information SFT2.

Every time a mini-batch process is completed, the decimal point position determiner 39 uses statistical information held in the memory 38 to determine the decimal point positions to be used in a next mini-batch process. The decimal point position determiner 39 calculates the decimal point position of the DFP32 output by the data converter 330 and the decimal point position of the DFP16 output by the data converter 328. Then, the decimal point position determiner 39 causes the shift information SFT1 indicating the decimal point position of the DFP32 and the shift information SFT2 indicating the decimal point position of the DFP16 to be stored in a predetermined register of the register file 34. In the process of the layer L2, statistical information acquired by the statistical information acquirer 334 is deleted every time a mini-batch process is completed.

The operations illustrated in FIG. 4 may be executed in parallel using the multiple operators 32. The processes of the layers L1, L2, and L3 may be executed using different operators 32, respectively. When the arithmetic processing device 102 includes multiple processor cores, each of which includes a vector unit 30 and a scalar unit 40, the processes of the layers L1, L2, and L3 may be executed using the different processor cores, respectively. Thus, the process of the layers L1, L2, and L3 may be executed in parallel, and a processing efficiency of the deep learning by the arithmetic processing device 102 may be improved.

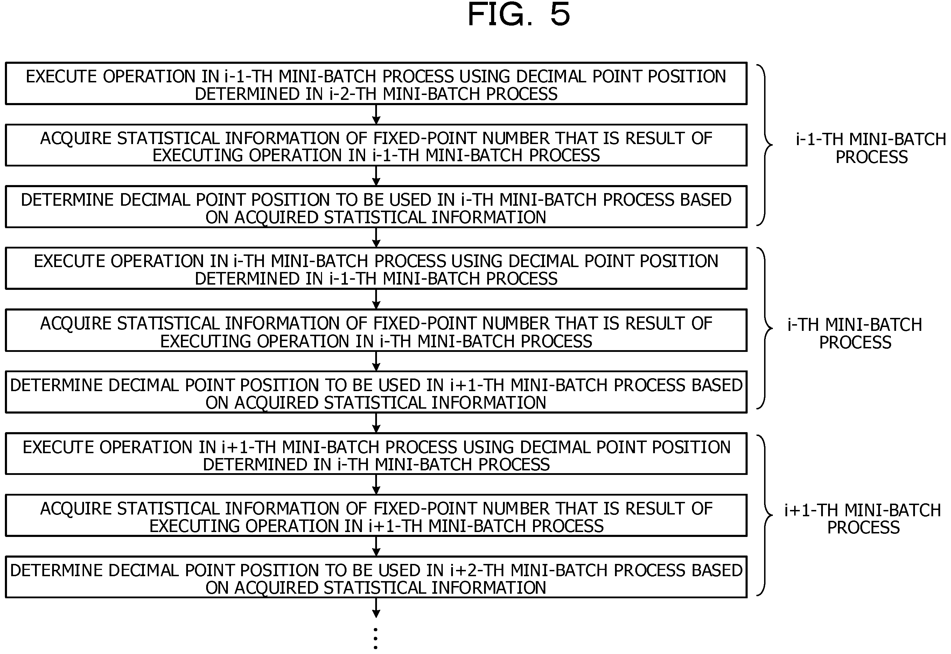

FIG. 5 illustrates an example in which a decimal point position is updated in each of the processes of the layers illustrated in FIG. 4. As described above, the processes of the layers are executed by executing the multiple mini-batch processes (i-1-th process, i-th process, i+1-th process, ...: i is a positive integer). Each of the mini-batch processes is executed using a fixed-point number having a decimal point position updated based on a decimal point position determined in a previous mini-batch process. Statistical information of a fixed-point number that is an operation result obtained in each of the mini-batch processes is acquired. For example, the statistical information to be acquired is one or more of a distribution of the most significant bits of bit values of data, a distribution of the least significant bits of the bit values of the data, the position of the maximum of the most significant bits, and the position of the minimum of the least significant bits. After each of the mini-batch processes is completed, a decimal point position to be used in a next mini-batch process is calculated based on acquired statistical information.

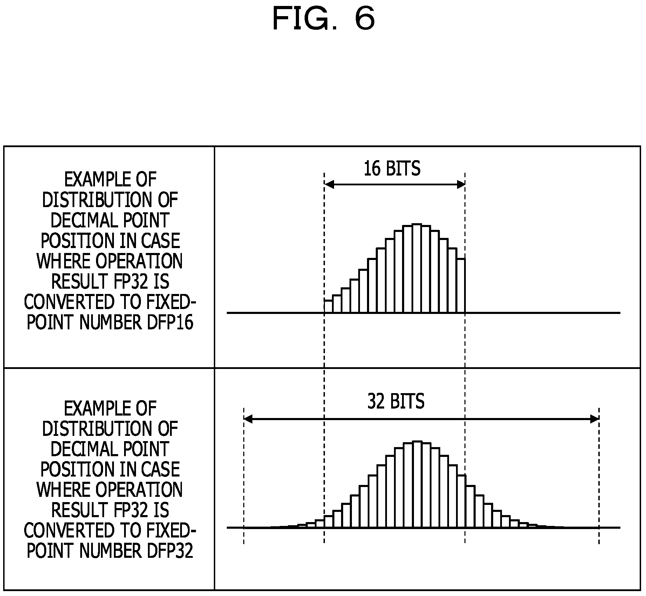

FIG. 6 illustrates an example of the case where statistical information of the 16-bit dynamic fixed-point number DFP16 is acquired and the case where the 32-bit dynamic fixed-point number DFP32 is acquired. For example, FIG. 6 illustrates distributions of the most significant bits of the bit values of the DFP16 and the DFP32 in a similar manner to FIG. 2.

A representable range (or a range of values) of the decimal point position of the floating-point number FP32 used by the FPU 320 is wide. Thus, when the operation result FP32 obtained by the FPU 320 is converted to the DFP16, an entire distribution of the operation result FP32 may not be acquired from the statistical information of the DFP16 with a high probability. In this case, the decimal point position may be determined based on an erroneous distribution. For example, on the upper side of FIG. 6, a distribution on a lower bit side is lost. On the other hand, when the operation result FP32 obtained by the FPU 320 is converted to the DFP32, an obtainable distribution of the operation result FP32 may be made wider and may be more accurate, compared with the DFP16.

Thus, as described with reference to FIG. 4, the operation result FP32 obtained by the FPU 320 is sequentially converted to the DFP32 and the DFP16 by the data converters 330 and 328 at two stages, statistical information is acquired using the DFP32, and thus the accuracy of calculating the decimal point position may be improved. Since the DFP32 may be represented on the same scale as 40 bits of the operation result obtained by the ALU 322, the statistical information acquirer 334 may acquire statistical information of values of the 40 bits of the operation result obtained by the ALU 322 and the statistical information of the DFP32. For example, the statistical information acquirer 334 may be made common to the values of the 40 bits and the DFP32, and a dedicated statistical information acquirer for acquiring statistical information of the DFP32 is not installed.

FIG. 7 illustrates an example of a method of setting the decimal point position of the 32-bit dynamic fixed-point number DFP32 based on the decimal point position of the 16-bit dynamic fixed-point number DFP16. In FIG. 7, a symbol S indicates a sign bit.

For example, when Q format of the DFP16 is set to (Q5.10), a decimal point, which is indicated by a black circuit, is set between a 9-th bit of the DFP16 and a 10-th bit of the DFP16. In the example illustrated in FIG. 7, in the case where Q format (Q5.10) of the 16 bits is expanded to Q format of 32 bits, the number of bits (8 bits) to be expanded on the upper bit side and the number of bits (8 bits) to be expanded on the lower bit side are the same. In the case where Q format (Q3.12) of the 16 bits is expanded to Q format of 32 bits, the number of bits (8 bits) to be expanded on the upper bit side and the number of bits (8 bits) to be expanded on the lower bit side are the same. Thus, the magnitude of a margin on the upper bit side (overflow side) and the magnitude of a margin on the lower bit side (underflow side) are the same.

When the decimal point position is in Q format (Q5.10), the decimal point position determiner 39 outputs the shift information SFT2 indicating "10". When the decimal point position is in Q format (Q2.12), the decimal point position determiner 39 outputs the shift information SFT2 indicating "12". "10" and "12" are bit numbers of ones place. The decimal point position determiner 39 generates the shift information SFT1 (= "18" or "20") by adding an offset value = "8" to the shift information SFT2 (= "10" or "12"). Thus, the DFP32 in which bits on the upper bit side and bits on the lower bit side are evenly distributed for the bit values of the DFP16 is generated.

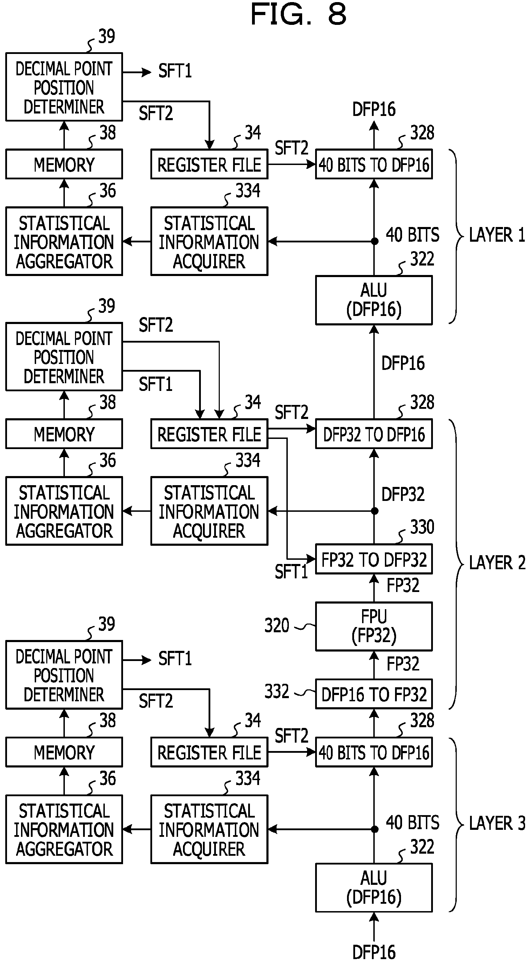

FIG. 8 illustrates an example of a backward process of updating a coefficient such as a weight using correct data in the deep learning executed using the arithmetic processing device 102 illustrated in FIG. 3. FIG. 8 illustrates an example of an operation in the case where a coefficient or the like used in the layers L3, L2, and L1 is optimized based on a difference between the correct data and an operation result obtained in a process of the last layer after the processes of the layers L1, L2, and L3 illustrated in FIG. 5 are sequentially executed. In other words, FIG. 8 illustrates an example in which the decimal point position is updated based on statistical information in the case where data to be used to optimize the coefficient or the like is transferred to the layers in the order of the layers L3, L2, and L1 in a direction opposite to a direction illustrated in FIG. 5.

For example, in a forward process of a convolution layer, statistical information of data output from the layers L1 to L3 is acquired as illustrated in FIG. 4. On the other hand, in a backward process of the convolution layer, statistical information of differential values input to the layers L1 to L3, differential values between weight parameters, and weight values after update after the addition of weights to the differential values is acquired. In the backward process, the flow of data is the same as or similar to the flow of data illustrated in FIG. 4.

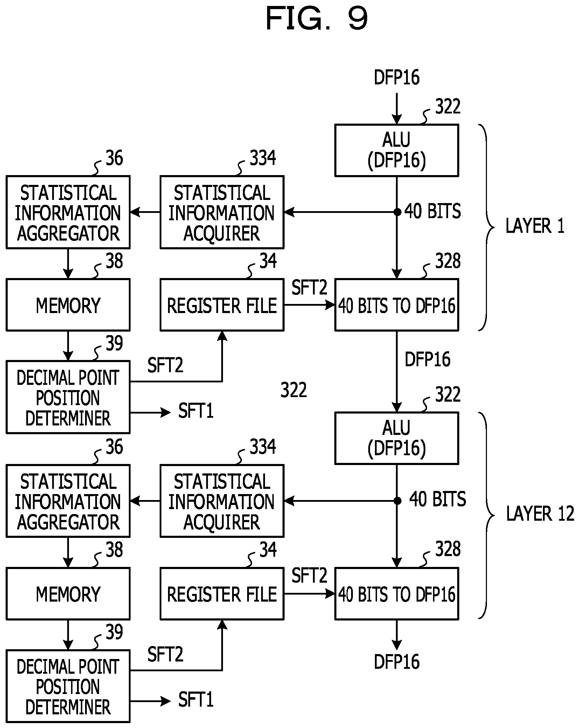

FIG. 9 illustrates another example of the deep learning executed using the arithmetic processing device 102 illustrated in FIG. 3. FIG. 9 illustrates an example in which processes of multiple layers L11 and L12 included in a deep neural network are sequentially executed by each of the multiple operators 32 of the arithmetic processing device 102 using the DFP16. For example, the processes of the layers L11 and L12 are executed by causing the ALU 322 to execute operations on the 16-bit dynamic fixed-point number DFP16. Components that are used for circuit operations to execute the processes of the layers L11 and L12 are the same as components that are used for circuit operations to execute the process of the layer L1 illustrated in FIG. 4. Then, the DFP16 converted and generated by the data converter 328 in the layer L11 is used in the process of the layer L12. In other words, FIG. 9 illustrates a case that is the same as or similar to the case where the process of the layer L2 is removed from the processes described with reference to FIG. 4 and the processes of the layers L1 and L3 are sequentially executed.

For example, the layer L12 executes the process using the DFP16 set based on a decimal point position determined in a previous mini-batch process executed in the layer L11. The layer L12 may reference the register file 34 and recognize an amount (for example, a shifted amount of 2) by which the decimal point position is updated in the layer L11. Then, in the process of the layer L12, when an amount by which the decimal point position determined by the decimal point position determiner 39 in the previous mini-batch process is shifted is "5", data output from the layer L12 is shifted by only "3" that is a difference from an amount by which the decimal point position is updated in the layer L11.

For example, it is assumed that the process of the layer L11 is convolution to be executed to repeatedly add a product of input data and weight data. In this case, when a decimal point position set in the input data is an a-th digit, a decimal point position set in the weight data is a b-th digit, and a decimal point position of the product that is an operation result is a c-th digit, a decimal point position of the output data is shifted by only "c - (a + b)".

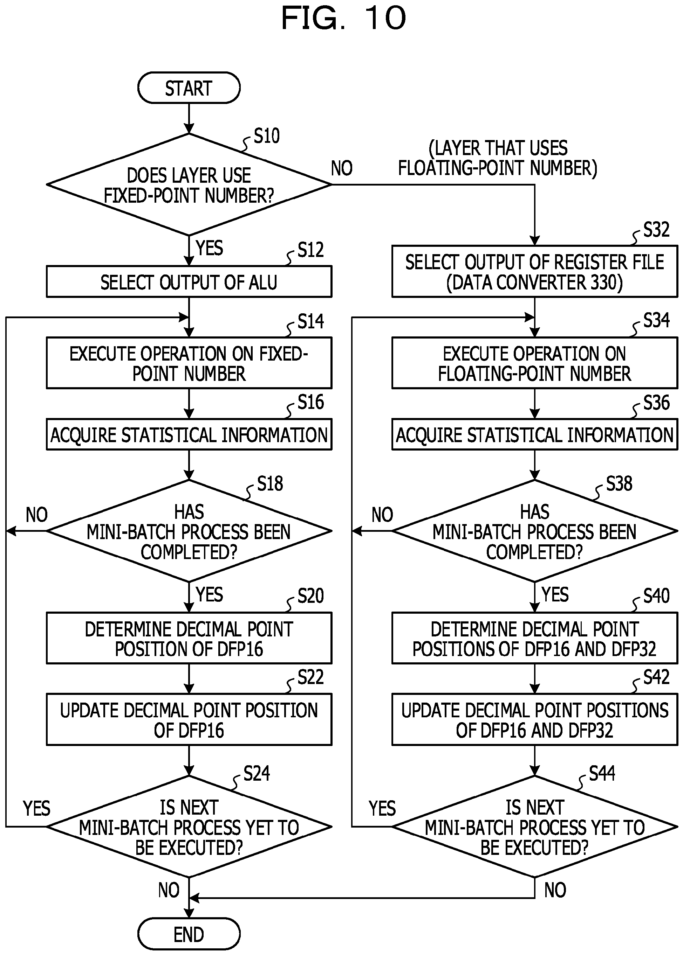

FIG. 10 illustrates an example of an operational flow of the arithmetic processing device 102 illustrated in FIG. 3. FIG. 10 illustrates an example of a method of controlling the arithmetic processing device 102. An operation illustrated in FIG. 10 is enabled by causing the arithmetic processing device 102 to execute the control program. For example, the operation illustrated in FIG. 10 is started in the case where each of the processes of the layers of the deep learning is executed by multiple mini-batch processes. The following operation is enabled by controlling an operation of an internal circuit of the arithmetic processing device 102 based on a control signal generated by causing the instruction decoder 24 to decode an instruction.

First, in step S10, the arithmetic processing device 102 causes the operation to proceed to step S12 in a layer that uses a fixed-point number, and the arithmetic processing device 102 causes the operation to proceed to step S32 in a layer that uses a floating-point number.

In step S12, the arithmetic processing device 102 selects output of the ALU 322. Next, in step S14, the arithmetic processing device 102 uses the ALU 322 to execute an operation on a fixed-point number. Next, in step S16, the arithmetic processing device 102 uses the statistical information acquirer 334 to acquire statistical information of operation results. Next, in step S18, when a single mini-batch process is completed, the arithmetic processing device 102 causes the operation to proceed to step S20, and when the mini-batch process is not completed, the arithmetic processing device 102 causes the operation to return to step S14 in order to execute a next operation.

In step S20, the arithmetic processing device 102 determines, based on the statistical information acquired in the mini-batch process, the decimal point position of the DFP16 to be used in a next mini-batch process. Next, in step S22, the arithmetic processing device 102 updates, in accordance with the determined decimal point position, the decimal point position of the DFP16 to be used in the next mini-batch process. Next, in step S24, when the next mini-batch process is yet to be executed, the arithmetic processing device 102 causes the operation to return to step S14, and when all the mini-batch processes have been completed in the layers, the arithmetic processing device 102 terminates the operation.

In step S32, the arithmetic processing device 102 selects output of the data converter 330 via the register file 34. Next, in step S34, the arithmetic processing device 102 uses the FPU 320 to execute an operation on a floating-point number. Next, in step S36, the arithmetic processing device 102 uses the statistical information acquirer 334 to acquire statistical information of operation results. Next, in step S38, when a single mini-batch process is completed, the arithmetic processing device 102 causes the operation to proceed to step S40, and when the mini-batch process is not completed, the arithmetic processing device 102 causes the operation to return to step S34 in order to execute a next operation.

In step S40, the arithmetic processing device 102 determines, based on the statistical information acquired in the mini-batch process, the decimal point positions of the DFP16 and DFP32 to be used in a next mini-batch process. Next, in step S42, the arithmetic processing device 102 updates, in accordance with the determined decimal point positions, the decimal point positions of the DFP16 and DFP32 to be used in the next mini-batch process. Next, in step S44, when the next mini-batch process is yet to be executed, the arithmetic processing device 102 causes the operation to return to step S34, and when all the mini-batch processes have been completed in the layers, the arithmetic processing device 102 terminates the operation.

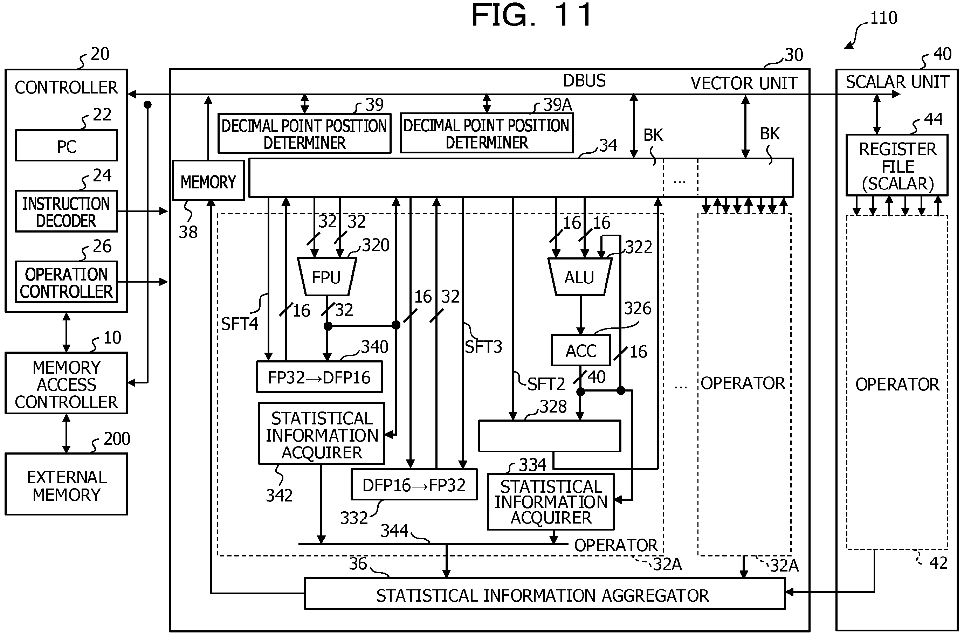

FIG. 11 illustrates another example (comparative example) of an arithmetic processing device. Components that are the same as or similar to those illustrated in FIG. 3 are indicated by the same symbols as those illustrated in FIG. 3 and will not be described in detail. An arithmetic processing device 110 illustrated in FIG. 11 includes operators 32A, instead of the operators 32 illustrated in FIG. 3, and includes a decimal point position determiner 39A, instead of the decimal point position determiner 39. Other configurations of the arithmetic processing device 110 are the same as or similar to those of the arithmetic processing device 102 illustrated in FIG. 3.

Each of the operators 32A directly uses an operation result (32-bit floating-point number FP32) obtained by the FPU 320 to acquire statistical information and thus does not include a data converter 330 (FIG. 3) that converts the FP32 to the DFP32. Each of the operators 32A includes a data converter 340 that converts the FP32 to the DFP16, instead of the data converter 330. The data converter 340 sets the decimal point position of the dynamic fixed-point number DFP16 based on shift information SFT4 held in the register file 34 and indicating an amount by which the decimal point position is shifted.

Each of the operators 32A includes a statistical information acquirer 342 as well as the statistical information acquirer 334. The statistical information acquirer 342 acquires statistical information of the operation result (FP32) obtained by the FPU 320. Since the statistical information acquirer 342 is installed independently of the statistical information acquirer 334, the operator 32A does not include the selector 324 illustrated in FIG. 3, and an operation result obtained by the ALU 322 is directly transferred to the accumulator register 326.

Each of the operators 32A includes a selector 344 that selects whether output of the statistical information acquirer 334 or output of the statistical information acquirer 342 is coupled to the statistical information aggregator 36. After the mini-batch processes are completed, the selector 344 selects either the output of the statistical information acquirer 334 or the output of the statistical information acquirer 342 by, for example, executing a switching instruction. For example, in the processes of the layers L1 and L3 illustrated in FIG. 4, the statistical information acquirer 334 is selected. For example, in the process of the layer L2 illustrated in FIG. 4, the statistical information acquirer 342 is selected.

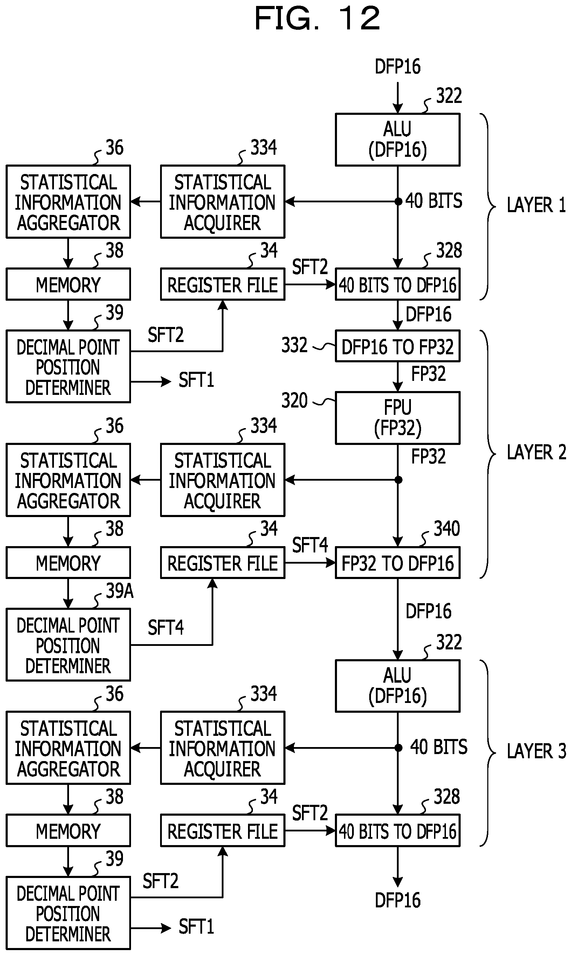

FIG. 12 illustrates an example (comparative example) of deep learning executed using the arithmetic processing device 110 illustrated in FIG. 11. Components that are the same as or similar to those illustrated in FIG. 4 will not be described in detail. Operations in layers L1 and L3 are the same as or similar to the operations described with reference to FIG. 4, except that the statistical information acquirer 334 transfers statistical information to the statistical information aggregator 36 via the selector 344.

In a process of a layer L2, the FPU 320 executes an operation instruction and outputs the operation result FP32. The data converter 340 converts the FP32 to the DFP16 and causes the DFP16 to be stored in the register file 34. In this case, the data converter 340 sets the decimal point position of the DFP16 based on the shift information SFT4 held in the register file 34. After that, a process of the layer L3 is executed using the DFP16 stored in the register file 34.

The statistical information acquirer 342 reads, from the register file 34, the 32-bit floating-point number FP32 that is the operation result obtained by the FPU 320. Then, the statistical information acquirer 342 acquires statistical information of the floating-point number FP32. For example, in the Institute of Electrical and Electronics Engineers (IEEE) 754 (floating-point operation standard) binary floating-point format, an exponential part of a single-precision floating-point number (of 32 bits) is 8 bits. Thus, the FP32 has any of 256 exponential values in a range of -126 to +127.

The statistical information acquirer 342 acquires, as statistical information, a distribution of the most significant bits of bit values of the FP32 for each of the 256 exponential values, for example. The statistical information acquired by the statistical information acquirer 342 is transferred to the statistical information aggregator 36 via the selector 344 after the completion of a mini-batch process.

For example, when the following floating-point operation instruction is executed, an operation may be executed and the conversion from the FP32 to the DFP16 may be executed by the data converter 340. The instruction is FADDq with Fdst, Fsrc1, Fsrc2, and Fqsft.

FADDq indicates the instruction to execute the addition operation on the floating-point number and execute a process (including the setting of the decimal point position) of executing the conversion to the DFP16. Fdst, Fsrc1, Fsrc2, and Fqsft indicate register numbers of the register file 34. dst indicates a destination operand, and src indicates a source operand. qsft indicates an amount by which the decimal point position is shifted. qsft is output as the shift information SFT4 to the data converter 340.

The statistical information aggregator 36 causes the transferred statistical information to be stored in the memory 38. The statistical information acquirer 342 may acquire, as statistical information, a distribution of the least significant bits of the bit values of the FP32, the position of the maximum of the most significant bits of the bit values of the FP32, or the position of the minimum of the least significant bits of the bit values of the FP32. The decimal point position determiner 39A determines a decimal point position based on a distribution of the 256 exponential values and causes the shift information SFT4 indicating the determined decimal point position to be stored in the register file 34.

The arithmetic processing device 110 illustrated in FIG. 11 includes the statistical information acquirers 342 for the FP32 and the decimal point position determiner 39A as well as the statistical information acquirers 334 and the decimal point position determiner 39, and includes the data converters 340 as well as the data converters 328. Thus, a circuit size of the arithmetic processing device 110 is larger than a circuit size of the arithmetic processing device 102 illustrated in FIG. 3.

In the embodiment described with reference to FIGs. 3 to 10, the statistical information acquirer 334, which is common to the FPU 320 and the ALU 322, may acquire statistical information of a floating-point number and statistical information of a fixed-point number, similarly to the embodiment described with reference to FIGs. 1 and 2. The decimal point position determiner 39, which is common to the FPU 320 and the ALU 322, may generate the shift information SFT1 and SFT2 to be used to update the decimal point positions of the DFP32 and DFP16. The shift information SFT1 may be easily generated by adding the predetermined offset value to the shift information SFT2. This may suppress increases in circuit sizes of the statistical information acquirer 334 and the decimal point position determiner 39. The shift information SFT1 and SFT2 may suppress a reduction in the accuracy of data to be used in a process to be executed later. As a result, the circuit size of the arithmetic processing device 102 may be reduced without a reduction in the accuracy of data and a reduction in the accuracy of the deep learning.

In the embodiment described with reference to FIGs. 3 to 10, the statistical information aggregator 36 causes statistical information aggregated by the statistical information aggregator 36 to be stored in the memory 38 coupled to the data bus DBUS. Thus, the decimal point position determiner 39 may access the memory 38 via the data bus DBUS to acquire the statistical information without communicating with the statistical information aggregator 36.

Since input of the accumulator register 326 is coupled to the selector 324, the operation result obtained by the ALU 322 and the DFP32, which is held in the register file 34 and is the operation result obtained by the FPU 320, may be selectively transferred to the data converter 328. For example, the common statistical information acquirer 334 may acquire statistical information of a result of executing an operation on a fixed-point number and statistical information of a result of executing an operation on a floating-point number.

The data converter 330 is coupled to output of the FPU 320. Thus, for example, when the FADDq instruction is executed, an operation may be executed on the FP32 and the conversion from the FP32 to the DFP32 may be executed by the data converter 330. In the case where the FP32 is processed in the layer L2 using the DFP16 obtained in the layer L1, the data converter 332 restores the decimal point position, corrected by the data converter 328, of the DFP16 to the decimal point position before the correction and converts the DFP16 to the FP32. Thus, the layer L2 executes the process using the nonlinear function that does not take over the decimal point position set in the layer L1.

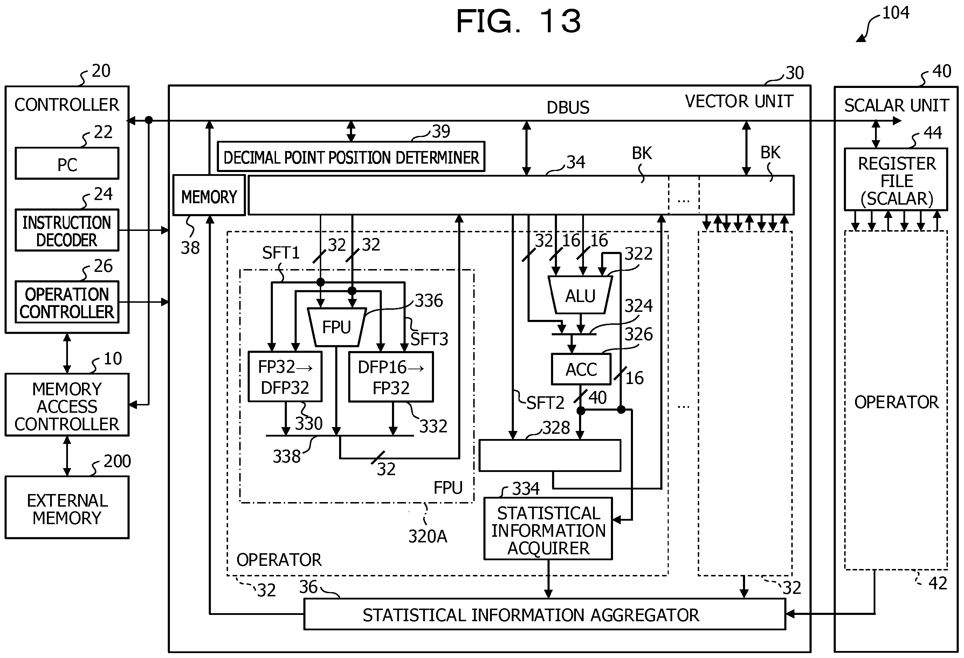

FIG. 13 illustrates an example of an arithmetic processing device according to another embodiment. Components that are the same as or similar to those illustrated in FIG. 3 are indicated by the same symbols as those illustrated in FIG. 3 and will not be described in detail. An arithmetic processing device 104 illustrated in FIG. 13 includes FPUs 320A, instead of the FPUs 320 illustrated in FIG. 3. The FPUs 320 (operators) illustrated in FIG. 3 are enabled as FPU operators 336 within the FPUs 320A. Each of the FPU operators 336 has the same function as the FPUs 320 illustrated in FIG. 3. Each of the FPUs 320A includes the data converters 330 and 332 illustrated in FIG. 3 and a selector 338 that selects any of output of the FPU operator 336, output of the data converter 330, and output of the data converter 332 and writes data back to the register file 34.

The conversion from the floating-point number FP32 to the dynamic fixed-point number DFP32 is executed by the data converter 330 as a process that is executed by the FPU 320A. The conversion from the dynamic fixed-point number DFP16 to the floating-point number FP32 is executed by the data converter 332 as a process that is executed by the FPU 320A. The data converter 330 receives, as an operand, the original FP32 to be converted and the shift information SFT1 indicating the decimal point position from the register file 34 and executes a process of converting the FP32. Similarly, the data converter 332 receives, as an operand, the DFP16 to be converted and the shift information SFT3 indicating the decimal point position from the register file 34 and executes a process of converting the DFP16.

The case where the process of the layer L2 illustrated in FIG. 4 is executed by the arithmetic processing device 104 illustrated in FIG. 13 is described below. First, the DFP16 obtained in the process of the layer L1 is read from the register file 34 and converted by the data converter 332 within the FPU 320A to the FP32, and the FP32 is stored in the register file 34. In this case, the decimal point position of the DFP16 may be restored to the decimal point position before the correction based on the shift information SFT3, and the DFP16 may be converted to the FP32.

Next, the FPU operator 336 executes an operation on the FP32 held in the register file 34 based on a floating-point operation instruction, and the operation result (FP32) is stored in the register file 34. Next, the operation result (FP32) obtained by the FPU operator 336 and the shift information SFT1 are read from the register file 34 and the data converter 330 converts the FP32 to the DFP32 having the decimal point position corresponding to the shift information SFT1. The DFP32 obtained by the conversion is stored in the register file 34. For example, the conversion from the FP32 to the DFP32 is executed by the data converter 330 based on the decoding, executed by the instruction decoder 24, of a DFP32 conversion instruction that is one of floating-point operation instructions.

For example, the operation by the FPU operator 336 on the FP32 and the process of converting the FP32 to the DFP32 by the data converter 330 are executed by sequentially executing the following instructions. The instructions are FADD with Fdst, Fsrc1, and Fsrc2 and FCNVQ32 with Fdst, Fsrc, and Fqsft.

FADD indicates an addition instruction for a floating-point number. Fdst, Fsrc1, Fsrc2, Fdst, Fsrc, and Fqsft indicate register numbers of the register file 34. dst indicates a destination operand, and src indicates a source operand. Fsrc of the FCNVQ32 instruction specifies the same register as that specified by Fdst of the FADD instruction. qsft indicates an amount by which the decimal point position is shifted. qsft is output as the shift information SFT1 to the data converter 330.

The statistical information acquirer 334 acquires statistical information of the DFP32 transferred from the register file 34 via the selector 324 and the accumulator register 326. The statistical information acquirer 334 transfers the acquired statistical information to the statistical information aggregator 36 upon the completion of a mini-batch process. The statistical information aggregator 36 causes the transferred statistical information to be stored in the memory 38. The DFP32 stored in the register file 34 is converted by the data converter 328 to the DFP16. The DFP16 that is the result of the process of the layer L2 is, for example, temporarily stored in the external memory 200 or the like via the register file 34. In the conversion from the DFP32 to the DFP16, the decimal point position of the DFP16 is corrected based on the shift information SFT2. After that, the process of the layer L3 described with reference to FIG. 4 is executed.

In the embodiment illustrated in FIG. 13, effects that are the same as or similar to those obtained in the embodiments illustrated in FIGs. 1 to 10 may be obtained. In the embodiment illustrated in FIG. 13, any of the output of the FPU operator 336, the output of the data converter 330, and the output of the data converter 332 is selectively coupled to the register file 34 by the selector 338. Thus, the number of signal lines between each of the operators 32 and the register file 34 may be reduced, compared with FIG. 3.

The features and advantages of the embodiments may be clarified by the above detailed description. This is intended to extend to the features and advantages of the embodiments as described above as long as the claims do not depart from the scope of right of the claims. A person skilled in the art is able to easily make any modifications and changes. It is therefore not intended that the scope of the embodiments having inventiveness be limited to the aforementioned embodiments. Appropriate modifications and equivalents may be included in the scope disclosed in the embodiments.

### [CITATION LIST]

### [PATENT LITERATURE]

[Patent Literature 1] Japanese Laid-open Patent Publication No. 2018-124681
[Patent Literature 2] International Publication Pamphlet No. WO 2018/139266
[Patent Literature 3] Japanese Laid-open Patent Publication No. 2008-059287
[Patent Literature 4] Japanese Laid-open Patent Publication No. 4-190399

### [REFERENCE SIGNS LIST]

1 Fixed-point operator
2 Floating-point operator
3 First converter
4 Selector
5 Statistical information acquirer
6 Update information generator
7 Second converter
10 Memory access controller
20 Controller
22 Program counter
24 Instruction decoder
26 Operation controller
30 Vector unit
32 Operator
34 Register file
36 Statistical information aggregator
38 Memory
39 Decimal point position determiner
40 Scalar unit
42 Operator
44 Register file
100, 102, 104 Arithmetic processing device
320 FPU
322 ALU
324 Selector
326 Accumulator register
328, 330, 332, Data converter
334 Statistical information acquirer

## Claims

1. An arithmetic processing device comprising:
a fixed-point operator that executes an operation on a fixed-point number;
a floating-point operator that executes an operation on a floating-point number;
a first converter that converts a result of the operation by the floating-point operator to a fixed-point number having a second bit width larger than a first bit width;
a statistical information acquirer that acquires statistical information of any of the fixed-point number output by the fixed-point operator and the fixed-point number output by the first converter; and
a second converter that converts, to a fixed-point number having the first bit width, the fixed-point number that has been output by the fixed-point operator or by the first converter and of which the statistical information has been acquired.

2. The arithmetic processing device according to claim 1, further comprising:
an update information generator that generates, based on the statistical information acquired by the statistical information acquirer, first update information to be used to update a decimal point position of the fixed-point number output by the first converter and second update information to be used to update a decimal point position of the fixed-point number output by the second converter, wherein
the first converter sets, based on the first update information, the decimal point position of the fixed-point number to be output, and
the second converter sets, based on the second update information, the decimal point position of the fixed-point number to be output.

3. The arithmetic processing device according to claim 2, wherein
the update information generator generates the first update information by adding a predetermined offset value to the decimal point position indicated by the second update information.

4. The arithmetic processing device according to claim 3, further comprising:
a storage unit in which the statistical information acquired by the statistical information acquirer is stored, wherein
the update information generator generates the first update information and the second update information based on the statistical information stored in the storage unit.

5. The arithmetic processing device according to any of claims 1 to 4, wherein
the second converter includes a third converter that converts the fixed-point number converted by the second converter and having the first bit width to a floating-point number,
the third converter restores the decimal point position of the fixed-point number to be converted to the floating-point number to the decimal point position before the setting by the second converter and converts the fixed-point number with the restored decimal point position to a floating-point number, and
the floating-point operator executes an operation on the floating-point number converted by the third converter.

6. The arithmetic processing device according to any of claims 1 to 5, further comprising:
a register that holds the fixed-point number converted by the first converter; and
a selector that selects the fixed-point number output by the fixed-point operator based on an operation instruction to cause the fixed-point operator to execute an operation and selects the fixed-point number held in the register from the first converter based on a transfer instruction to transfer the result of the operation by the floating-point operator to the second converter, wherein
the statistical information acquirer acquires statistical information of the fixed-point number selected by the selector.

7. The arithmetic processing device according to any of claims 1 to 6, further comprising:
an instruction decoder that decodes an instruction, wherein
the first converter is coupled to output of the floating-point operator, and
when the instruction decoder decodes a composite instruction indicating the execution of the operation by the floating-point operator and the execution of the conversion by the first converter, the first converter converts the floating-point number that is the result of the operation by the floating-point operator to a fixed-point number having the second bit width.

8. The arithmetic processing device according to any of claims 1 to 7, wherein
the statistical information acquirer acquires, as statistical information, distribution information of bits of the fixed-point number output by the fixed-point operator or distribution information of bits of the fixed-point number output by the first converter.

9. A method of controlling an arithmetic processing device including a fixed-point operator that executes an operation on a fixed-point number and a floating-point operator that executes an operation on a floating-point number, comprising:
converting a result of the operation by the floating-point operator to a fixed-point number having a second bit width larger than a first bit width;
acquiring statistical information of any of the fixed-point number output by the fixed-point operator and the converted fixed-point number having the second bit width; and
converting, to a fixed-point number having the first bit width, the fixed-point number that has been output by the fixed-point operator or has been obtained by the conversion and has the second bit width and of which the statistical information has been acquired.

## Patentansprüche

1. Vorrichtung zur arithmetischen Verarbeitung, umfassend:
ein Festkommaoperator, der eine Operation an einer Festkommazahl ausführt;
einen Gleitkommaoperator, der eine Operation an einer Gleitkommazahl ausführt;
einen ersten Konverter, der ein Ergebnis der Operation durch den Gleitkommaoperator in eine Festkommazahl mit einer zweiten Bitbreite, die größer als eine erste Bitbreite ist, konvertiert;
einen Erwerber für statistische Informationen, der statistische Informationen über eine von der von dem Festkommaoperator ausgegebenen Festkommazahl und der von dem ersten Konverter ausgegebenen Festkommazahl erfasst; und
einen zweiten Konverter, der die Festkommazahl, die von dem Festkommaoperator oder von dem ersten Konverter ausgegeben wurde und über die die statistischen Informationen erfasst wurden, in eine Festkommazahl mit der ersten Bitbreite konvertiert.

2. Vorrichtung zur arithmetischen Verarbeitung nach Anspruch 1, ferner umfassend:
einen Generator für Aktualisierungsinformationen, der basierend auf den von dem Erwerber für statistische Informationen erfassten statistischen Informationen erste Aktualisierungsinformationen, die zum Aktualisieren einer Dezimalpunktposition der von dem ersten Konverter ausgegebenen Festkommazahl verwendet werden sollen, und zweite Aktualisierungsinformationen, die zum Aktualisieren einer Dezimalpunktposition der von dem zweiten Konverter ausgegebenen Festkommazahl verwendet werden sollen, generiert, wobei der erste Konverter die Dezimalpunktposition der auszugebenden Festkommazahl basierend auf den ersten Aktualisierungsinformationen einstellt, und
der zweite Konverter die Dezimalpunktposition der auszugebenden Festkommazahl basierend auf den zweiten Aktualisierungsinformationen einstellt.

3. Vorrichtung zur arithmetischen Verarbeitung nach Anspruch 2, wobei der Generator für Aktualisierungsinformationen die ersten Aktualisierungsinformationen durch Addieren, zu der Dezimalpunktposition, eines vorbestimmten Versatzwertes, der durch die zweiten Aktualisierungsinformationen angegebenen wird, generiert.

4. Vorrichtung zur arithmetischen Verarbeitung nach Anspruch 3, ferner umfassend:
eine Speichereinheit, in der die von dem Erwerber für statistische Informationen erfassten statistischen Informationen gespeichert werden, wobei
der Generator für Aktualisierungsinformationen die ersten Aktualisierungsinformationen und
die zweiten Aktualisierungsinformationen basierend auf den in der Speichereinheit gespeicherten statistischen Informationen generiert.

5. Vorrichtung zur arithmetischen Verarbeitung nach einem der Ansprüche 1 bis 4, wobei der zweite Konverter einen dritten Konverter aufweist, der die Festkommazahl, die von dem zweiten Konverter konvertiert wurde und die die erste Bitbreite aufweist, in eine Gleitkommazahl konvertiert,
der dritte Konverter die Dezimalpunktposition der in die Gleitkommazahl zu konvertierenden Festkommazahl wieder auf die Dezimalpunktposition vor der Einstellung durch den zweiten Konverter zurücksetzt, und die Festkommazahl mit der wiederhergestellten Dezimalpunktposition in eine Gleitkommazahl konvertiert, und
der Gleitkommaoperator eine Operation an der von dem dritten Konverter konvertierte Gleitkommazahl ausführt.

6. Vorrichtung zur arithmetischen Verarbeitung nach einem der Ansprüche 1 bis 5, ferner umfassend:
ein Register, das die von dem ersten Konverter konvertierte Festkommazahl aufweist; und
einen Selektor, der die von dem Festkommaoperator ausgegebene Festkommazahl basierend auf einer Operationsanweisung zum Bewirken, dass der Festkommaoperator eine Operation auszuführt, auswählt, und die in dem Register gehaltene Festkommazahl von dem ersten Konverter basierend auf eine Übertragungsanweisung zum Übertragen des Ergebnisses der Operation durch den Gleitkommaoperator an den zweiten Konverter auswählt, wobei der Erwerber für statistische Informationen statistische Informationen der von dem Selektor ausgewählten Festkommazahl erfasst.

7. Vorrichtung zur arithmetischen Verarbeitung nach einem der Ansprüche 1 bis 6, ferner umfassend:
einen Anweisungsdecodierer, der eine Anweisung decodiert, wobei der erste Konverter mit einem Ausgang des Gleitkommaoperators gekoppelt ist, und
wenn der Anweisungsdecodierer eine zusammengesetzte Anweisung decodiert, die die Ausführung der Operation durch den Gleitkommaoperator und die Ausführung der Konvertierung durch den ersten Konverter angibt, der erste Konverter die Gleitkommazahl, die das Ergebnis der Operation durch den Gleitkommaoperator ist, in eine Festkommazahl mit der zweiten Bitbreite konvertiert.

8. Vorrichtung zur arithmetischen Verarbeitung nach einem der Ansprüche 1 bis 7, wobei der Erwerber für statistische Informationen als statistische Informationen Verteilungsinformationen von Bits der von dem Festkommaoperator ausgegebenen Festkommazahl oder Verteilungsinformationen von Bits der von dem ersten Konverter ausgegebenen Festkommazahl erfasst.

9. Verfahren zur Steuerung einer Vorrichtung zur arithmetischen Verarbeitung, aufweisend einen Festkommaoperator, der eine Operation an einer Festkommazahl ausführt, und einen Gleitkommaoperator, der eine Operation an einer Gleitkommazahl ausführt, umfassend:
Konvertieren eines Ergebnisses der Operation durch den Gleitkommaoperator in eine Festkommazahl mit einer zweiten Bitbreite, die größer als eine erste Bitbreite ist;
Erfassen von statistischen Informationen über eine von der von dem Festkommaoperator ausgegebenen Festkommazahl und der konvertierten Festkommazahl, die die zweite Bitbreite aufweist; und
Konvertieren der Festkommazahl, die von dem Festkommaoperator ausgegeben wurde oder durch die Konvertierung erhalten wurde und die die zweite Bitbreite aufweist und über die die statistischen Informationen erfasst wurden, in eine Festkommazahl mit der ersten Bitbreite.

## Revendications

1. Dispositif de traitement arithmétique comprenant :
un opérateur à virgule fixe qui exécute une opération sur un nombre à virgule fixe ;
un opérateur à virgule flottante qui exécute une opération sur un nombre à virgule flottante ;
un premier convertisseur qui convertit un résultat de l'opération par l'opérateur à virgule flottante en un nombre à virgule fixe ayant une seconde largeur de bit supérieure à une première largeur de bit ;
un dispositif d'acquisition d'informations statistiques qui acquiert des informations statistiques de l'un quelconque du nombre à virgule fixe délivré en sortie par l'opérateur à virgule fixe et du nombre à virgule fixe délivré en sortie par le premier convertisseur ; et
un deuxième convertisseur qui convertit, en un nombre à virgule fixe ayant la première largeur de bit, le nombre à virgule fixe qui a été délivré en sortie par l'opérateur à virgule fixe ou par le premier convertisseur et dont les informations statistiques ont été acquises.

2. Dispositif de traitement arithmétique selon la revendication 1, comprenant en outre :
un générateur d'informations de mise à jour qui génère, sur la base des informations statistiques acquises par le dispositif d'acquisition d'informations statistiques, des premières informations de mise à jour à utiliser pour mettre à jour une position de virgule décimale du nombre à virgule fixe délivré en sortie par le premier convertisseur et des secondes informations de mise à jour à utiliser pour mettre à jour une position de virgule décimale du nombre à virgule fixe délivré en sortie par le deuxième convertisseur, dans lequel
le premier convertisseur établit, sur la base des premières informations de mise à jour, la position de virgule décimale du nombre à virgule fixe à délivrer en sortie, et
le deuxième convertisseur établit, sur la base des secondes informations de mise à jour, la position de virgule décimale du nombre à virgule fixe à délivrer en sortie.

3. Dispositif de traitement arithmétique selon la revendication 2, dans lequel
le générateur d'informations de mise à jour génère les premières informations de mise à jour en ajoutant une valeur de décalage prédéterminée à la position de virgule décimale indiquée par les secondes informations de mise à jour.

4. Dispositif de traitement arithmétique selon la revendication 3, comprenant en outre :
une unité de stockage dans laquelle les informations statistiques acquises par le dispositif d'acquisition d'informations statistiques sont stockées, dans lequel
le générateur d'informations de mise à jour génère les premières informations de mise à jour et les secondes informations de mise à jour sur la base des informations statistiques stockées dans l'unité de stockage.

5. Dispositif de traitement arithmétique selon l'une quelconque des revendications 1 à 4, dans lequel
le deuxième convertisseur comprend un troisième convertisseur qui convertit le nombre à virgule fixe converti par le deuxième convertisseur et ayant la première largeur de bit en un nombre à virgule flottante,
le troisième convertisseur restaure la position de virgule décimale du nombre à virgule fixe à convertir en nombre à virgule flottante à la position de virgule décimale avant l'établissement par le deuxième convertisseur et convertit le nombre à virgule fixe avec la position de virgule décimale restaurée en un nombre à virgule flottante, et
l'opérateur à virgule flottante exécute une opération sur le nombre à virgule flottante converti par le troisième convertisseur.

6. Dispositif de traitement arithmétique selon l'une quelconque des revendications 1 à 5, comprenant en outre :
un registre qui contient le nombre à virgule fixe converti par le premier convertisseur ; et
un sélecteur qui sélectionne le nombre à virgule fixe délivré en sortie par l'opérateur à virgule fixe sur la base d'une instruction d'opération pour amener l'opérateur à virgule fixe à exécuter une opération et sélectionne le nombre à virgule fixe contenu dans le registre à partir du premier convertisseur sur la base d'une instruction de transfert pour transférer le résultat de l'opération par l'opérateur à virgule flottante au deuxième convertisseur, dans lequel
le dispositif d'acquisition d'informations statistiques acquiert des informations statistiques du nombre à virgule fixe sélectionné par le sélecteur.

7. Dispositif de traitement arithmétique selon l'une quelconque des revendications 1 à 6, comprenant en outre :
un décodeur d'instruction qui décode une instruction, dans lequel
le premier convertisseur est couplé à une sortie de l'opérateur à virgule flottante, et
lorsque le décodeur d'instruction décode une instruction composite indiquant l'exécution de l'opération par l'opérateur à virgule flottante et l'exécution de la conversion par le premier convertisseur, le premier convertisseur convertit le nombre à virgule flottante qui est le résultat de l'opération par l'opérateur à virgule flottante en un nombre à virgule fixe ayant la seconde largeur de bit.

8. Dispositif de traitement arithmétique selon l'une quelconque des revendications 1 à 7, dans lequel
le dispositif d'acquisition d'informations statistiques acquiert, en tant qu'informations statistiques, des informations de distribution de bits du nombre à virgule fixe délivré en sortie par l'opérateur à virgule fixe ou des informations de distribution de bits du nombre à virgule fixe délivré en sortie par le premier convertisseur.

9. Procédé de commande d'un dispositif de traitement arithmétique comprenant un opérateur à virgule fixe qui exécute une opération sur un nombre à virgule fixe et un opérateur à virgule flottante qui exécute une opération sur un nombre à virgule flottante, comprenant les étapes consistant à :
convertir un résultat de l'opération par l'opérateur à virgule flottante en un nombre à virgule fixe ayant une seconde largeur de bit supérieure à une première largeur de bit ;
acquérir des informations statistiques de l'un quelconque du nombre à virgule fixe délivré en sortie par l'opérateur à virgule fixe et du nombre à virgule fixe converti ayant la seconde largeur de bit ; et
convertir, en un nombre à virgule fixe ayant la première largeur de bit, le nombre à virgule fixe qui a été délivré en sortie par l'opérateur à virgule fixe ou qui a été obtenu par la conversion et a la seconde largeur de bit et dont les informations statistiques ont été acquises.
